# EUROPEAN PATENT APPLICATION

(11) **EP 2 187 301 A1**
(43) Date of publication of application: **19.05.2010**
(21) Application number: 07806768.3
(22) Date of filing: 05.09.2007
(51) Int. Cl.: G06F 3/048, G06F 3/041

(54) **PORTABLE TERMINAL DEVICE AND DISPLAY CONTROL METHOD**

(71) Applicant: Panasonic Corporation, Kadoma-shi Osaka 571-8501 (JP)
(72) Inventor: SAKATSUME, Toshihiro, Osaka-shi, Osaka 540-6207 (JP)
(74) Representative: Grünecker, Kinkeldey, Stockmair & Schwanhäusser Anwaltssozietät
(86) International application number: PCT/JP2007/067326
(87) International publication number: WO 2009/031213

(57) **Abstract**

The present invention provides a portable terminal device that can enhance reproducibility of an operation output from a touch pad or an input device typified by the touch pad for detecting a press, thereby improving ease of intuitive operation or elaborate operation of the input device. The portable terminal device of the present invention has a display section 11 for displaying various types of information, a touch pad 12 for detecting a press, and a control unit 16 for controlling a shape of a pointer to be displayed on the display section 11 in accordance with a pressed area detected by the touch pad 12.

## Description

### Technical Field

The present invention relates to a portable terminal device having an input device for detecting a press, typified by a touch panel and a touch pad, and more particularly to a portable terminal device that enhances operability of a touch panel and a touch pad.

### Background Art

Information processing devices, typified by a portable cellular phone and a PDA (Personal Digital Assistance), have recently developed into high-performance terminals having a variety of functions, such as a data communication function and a digital camera function, along with an increase in clock speed of a CPU and memory size. As a result of a high integration of an integrated circuit and miniaturization of an electronic module, the information processing unit is miniaturized to such an extent that it can be held in one hand. Against this backdrop, a user must manage to use many functions provided in the information processing unit by way of an operation section that is provided in a main body of the information processing unit and that is limited in terms of operability. The user finds himself/herself in the context of being forcefully managed to perform complicate and non-intuitive operation.

In some related-art information processing devices (as disclosed in; for instance, Patent Document 1), a touch pad is disposed on the back of a display provided in the information processing device, a user of the device performs operation by way of the touch pad while holding the information processing device in one hand, thereby controlling the position of a pointer appearing on the display.
Patent Document 1: JP-A-2002-318640

### Disclosure of Invention

### Problems to be Solved by Invention

However, in the information processing device disclosed in Patent Document 1, an area on a contact surface that is touched with a finger when the touch pad is operated and a distribution of pressure over the contact surface change depending on how the device user holds and grips the portable terminal device. As a result, display contents which are intended by the device user who performs operation by way of the touch pad and are envisioned to appear on the display of the information processing device do not match display contents that are displayed by the information processing device in response to the operation, thereby leading to a problem of deteriorated reproducibility of an operation output. In the information processing device in which a touch pad is provided on the back side of the display, the device user cannot view a finger contact surface during operation of the touch pad. This also causes deterioration of the reproducibility of an operation output. Thus, intuitive operation or elaborate operation utilizing a touch pad, which is realized by the information processing device exhibiting low reproducibility of an operation output, has its limit.

The present invention has been conceived in view of the circumstance and aims at providing a portable terminal device and a display control method that make it possible to enhance reproducibility of an operation output from a touch pad or an input device typified by the touch pad for detecting a press, thereby improving ease of intuitive operation or elaborate operation of the touch pad or the input device.

### Means For Solving Problems

A portable terminal device according to the present invention includes: a display section for displaying various pieces of information thereon; a press detection section that is adapted to detect a press; and a control unit that is adapted to control a shape of a pointer to be displayed on the display section in accordance with a pressed area detected by the press detection section.

A display control method according to the present invention includes: detecting a pressed area; controlling a shape of a pointer to be displayed in accordance with the pressed area where a press has been detected; and displaying the pointer whose shape is controlled.

The configuration makes it possible to enhance reproducibility of an operation output from a touch pad or an input device typified by the touch pad for detecting a press, thereby improving intuitive operation or elaborate operation of the input device.

The portable terminal device according to the present invention includes a configuration, wherein the control unit accepts operation for selecting any of display targets when at least a part of the display targets that can be selected by the pointer is included in numbers in the area specified by the pointer.

The portable terminal device according to the present invention includes a configuration, wherein the device includes an operation section, and the control unit selects any of the display targets in response to operation that is accepted by the operation section and that is intended for selecting any of the display targets.

When a portion or entirety of a display area of a display target which can be selected by a pointer is included in numbers in an area indicated by the pointer, the device user can select one display target.

The portable terminal device according to the present invention includes a configuration, wherein, when a plurality of pressed areas are detected by the press detection section, the control unit displays on the display section a plurality of pointers based on the respective pressed areas.

Even when the device user operates the touch pad with a plurality of fingers, the configuration makes it possible to display a plurality of pointers.

The portable terminal device according to the present invention includes a configuration, wherein the control unit controls the shape of the pointer so as to be a shape similar to the pressed area.

The portable terminal device according to the present invention includes a configuration, wherein the control unit controls the shape of the pointer so as to be a shape of a predetermined figure.

The portable terminal device according to the present invention includes a configuration, wherein the control unit controls a size of the pointer in accordance with pressure of the press detected by the press detection section.

The portable terminal device according to the present invention includes a configuration, wherein the device includes an operation section, and a size of the pointer is controlled in accordance with input operation accepted by the operation section.

The configuration makes it possible for the device user to arbitrarily set the shape and size of a pointer.

### Advantageous Effect of Invention

The portable terminal device and the display control method of the present invention make it possible to enhance reproducibility of an operation output from a touch pad or an input device typified by the touch pad for detecting a press, thereby improving ease of intuitive operation or elaborate operation of the touch pad or the input device.

### Brief Description of Drawings

Fig. 1 is a block diagram of a portable terminal device of an embodiment of the present invention;
In Fig. 2, (a) is a front view of the portable terminal device of the embodiment of the present invention held in one hand, and (b) is a rear view of the same;
Fig. 3 show schematic illustrations of processing performed by the portable terminal device of the embodiment of the present invention;
Fig. 4 is a flowchart showing a flow of processing performed by the portable terminal device of the embodiment of the present invention;
Fig. 5 shows an exemplary display on the portable terminal device of the embodiment of the present invention produced (a) when display targets that can be selected by a pointer 51 remain unchanged, and (b) when display targets that can be selected by the pointer 51 are distinguishably displayed; and
Fig. 6 shows an exemplary display on the portable display unit of the embodiment of the present invention produced (a) when a cursor 62 points at the lowest display target, and (b) when the cursor 62 points at the highest display target.

### Description of Reference Numerals and Signs

- 11: DISPLAY SECTION
- 12: TOUCH PAD
- 13: OPERATION KEYS
- 14: EXECUTION PROGRAM STORAGE SECTION
- 15: COMPUTATION INFORMATION STORAGE SECTION
- 16: CONTROL UNIT
- 21: FOREFINGER
- 22: THUMB
- 31: CELL DETECTED PRESS
- 32: POINTER
- 33a, 33b, 33c: DISPLAY TARGETS
- 34: CURSOR
- 51: POINTER
- 61a, 61b: POINTER
- 62: CURSOR

### Best Mode For Carrying Out Invention

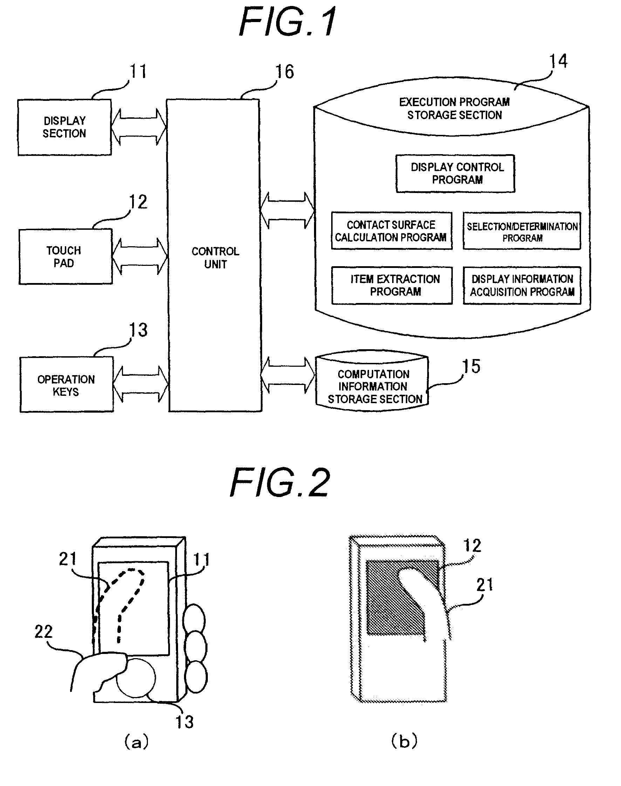

A portable terminal device of an embodiment of the present invention is hereunder described. The configuration of the portable terminal device of the embodiment of the present invention is first described by reference to a block diagram of the portable terminal device of the embodiment shown in Fig. 1. A portable terminal device of the embodiment of the present invention includes a display section 11; a touch pad 12; operation keys 13; an execution program storage section 14; a computation information storage section 15; and a control unit 16. The display section 11 includes a liquid crystal display or an organic EL display and displays various types of information in accordance with a control signal output from the control unit 16. The touch pad 12 includes a sensor of each of various types (e.g., a capacitive type, a resistance film, or an infrared ray insulating type for detecting a position pressed by the device user) and outputs a signal detected by the sensor to the control unit 16. The operation keys 13 include; for instance, direction keys for indicating a direction in which a cursor is to move or keys assigned 0 to 9 numbers or specific functions. Each of he operation keys 13 accepts an input signal from a device user and outputs the thus-accepted signal to the control unit 16. The execution program storage section 14 stores various programs executed by the control unit 16. The computation information storage section 15 stores data output as a result of a program being executed by the control unit 16. The control unit 16 performs various computation processing operations by reference to various programs stored in the execution program storage section 14.

In Fig. 2, (a) is a front view of the portable terminal device of the embodiment of the present invention held in one hand, and (b) is a rear view of the same. The portable terminal device of the embodiment of the present invention is designed into a shape such that the portable terminal device can be held in one hand. The display section 11 is provided on one side of the portable terminal device, and the touch pad 12 is provided on the rear side of the same. The side on which the display section 11 is provided is herein taken as a front side, and the side on which the touch pad 12 is provided is herein taken as a rear side. In Fig. 2, the device user holds the portable terminal device by his/her left hand. Actuation of the touch pad 12 is performed by bringing a forefinger 21 into contact with the touch pad 12. Further, actuation of the operation keys 13 is performed by a thumb 22.

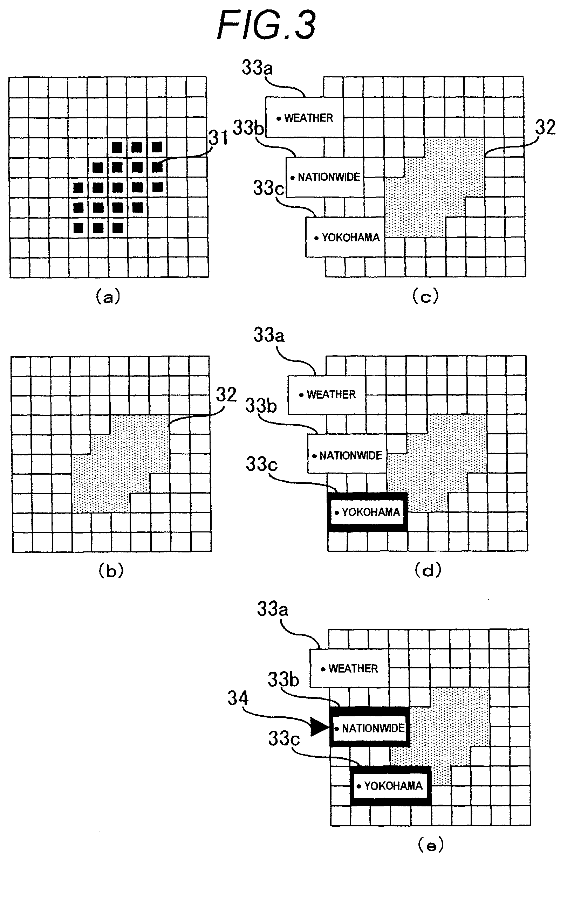

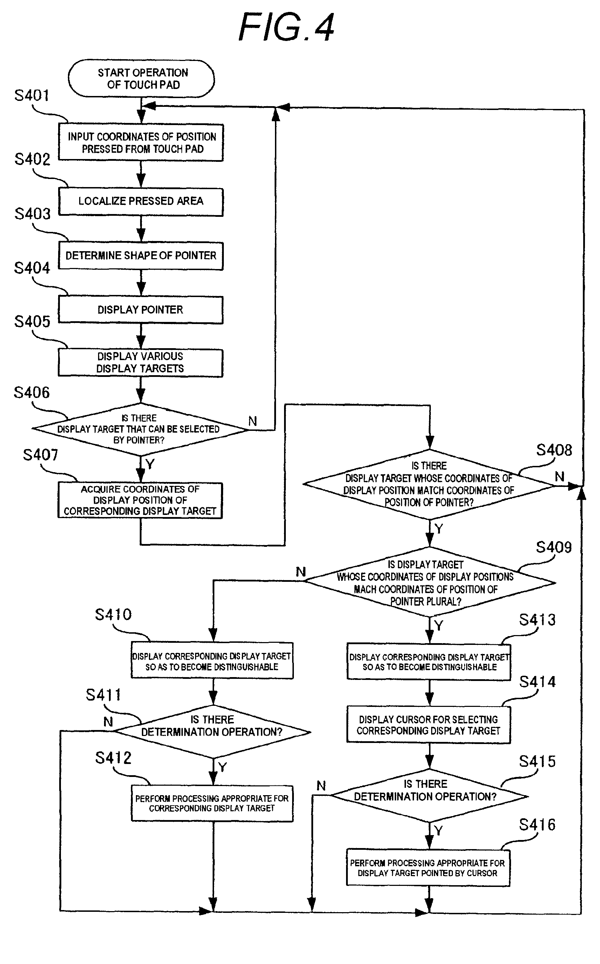

Computation processing performed by the control unit 16 is now described by reference to schematic views of processing performed by the portable terminal device of the embodiment of the present invention shown in Fig. 3 and a flowchart showing flow of processing performed by the portable terminal device of the embodiment of the present invention shown in Fig. 4.

First, when the device user operates the touch pad 12 by bringing a finger into contact with the touch pad 12, the control unit 16 receives a signal that is output from the touch pad 12 and that shows a pressed position on the touch pad 12 (step 401). For instance, in a case where the touch pad 12 is of capacitive type, capacitors are arranged in a matrix pattern within the touch pad 12. Capacitor located at a pressed position output signals that are lower than signals output from an unpressed position in terms of a voltage. The control unit 16 therefore localizes coordinates of a pressed position on the touch pad 12 by means of a voltage value of the signal output from the touch pad 12. An aggregate of coordinates of positions of cells in which a press is detected (solid-black cells 31 shown in (a) of Fig. 3), among the capacitors arranged in a matrix pattern, is hereinafter called a pressed area.

In accordance with a signal that is input by the touch pad 12 and that shows a pressed position on the touch pad 12, the control unit 16 localizes a pressed area where the touch pad 12 is pressed (step 402) and determines a shape of a pointer 32 from the pressed area (step 403). The control unit then lets the display section 11 display the pointer 32 in the pressed area (or an area including the pressed area as a portion) (step 404). The control unit 16 makes the shape of the pointer 32 similar to the shape of the pressed area and rescales the shape to 50%, 100%, 200%, and the like. The control unit 16 determines the size of the shape of the pointer 32 in various manners. For instance, the control unit 16 determines the size of the shape of the pointer 32 in accordance with the magnitude of pressure detected by the touch pad 12 or in response to button operation received from the operation keys 13 in the middle of indication of the pointer 32. Further, the control unit 16 determines the size of the shape of the pointer when detected taps on the touch pad 12 (quick double taps on the touch pad 12 conducted by the device user) or when detected operation for drawing a circle. Upon receipt of a signal, which shows a pressed position, from the touch pad 12 at predetermined timing, the control unit 16 iterates processing for localizing the pressed area (performs this processing by reference to a contact area calculation program shown in Fig. 1), determining the shape of the pointer (performs this processing by reference to a display control program shown in Fig. 1), and displaying the pointer (performs this processing by reference to the display control program shown in Fig. 1), thereby moving the pointer on the display section 11 in response to operation of the touch pad 12 performed by the device user.

Concurrently with performance of iterative processing for displaying the pointer, the control unit 16 lets the display section 11 display various display targets, such as a website described in an HTML, operation menu information (a menu launcher, a menu icon, and the like), time information, and a background image (step 405). The control unit 16, at this time, analyzes a source for letting the display section display various display targets. When display targets that can be selected by the pointer are included in the various display targets (Y in step 406), coordinates of display positions of the targets are acquired (step 407: this processing is carried out by reference to a display information acquisition program shown in Fig. 1).

As shown in (c) of Fig. 3, the control unit 16 displays the pointer 32 and various display targets 33a, 33b, and 33c on the display section 11. During the course of repeated processing for displaying the pointer, the control unit 16 is making a determination as to whether or not coordinates of the positions of the plurality of cells configuring the pointer 32 in the display match coordinates of a display position of a display target that can be selected by the pointer (step 408: this processing is carried out by reference to an item extraction program). In (c) of Fig. 3, a case is shown where no match exists between coordinates of positions of the plurality of cells configuring the pointer 32 in the display and coordinates of display positions of display targets that can be selected by a pointer (N in step 408). The display targets 33a, 33b, and 33c that have no match in terms of coordinates of display positions are displayed colorlessly.

Meanwhile, when the coordinates of the positions of the plurality of cells configuring the pointer 32 in the display match up with coordinates of the position of the display target that can be selected by the pointer (Y in step 408) during the course of iterative processing for displaying the pointer (Y in step 408), the control unit 16 lets the display section 11 display the display target 33c whose coordinates of a display position matched up with the coordinates of the positions of the plurality of cells configuring the pointer 32 in the display so as to be distinguishable from the display targets 33a and 33b, as shown in (d) of Fig 3 (step 410). In (d) of Fig. 3, a case is shown where the display targets 33a and 33b whose coordinates of display positions do not match the coordinates of the positions of the cells are displayed colorlessly and where the display target 33c whose coordinates of a display position matches up with the coordinates of the positions of the cells is displayed in color. Upon receipt of determination operation made by way of the operation keys 13 (Y in step 411), the control unit 16 determines that the display target 33c is selected at that point in time (this processing is carried out by reference to a selection/determination program shown in Fig. 1). The control unit 16 subsequently performs processing appropriate for the display target 33c (e.g., a jump to the next menu item, launching of an application program, and the like) (step 412).

When the coordinates of the positions of the plurality of cells configuring the pointer 32 being displayed match coordinates of a display position of a display target that can be selected by a pointer during the course of performance of iterative processing for displaying the pointer and when the display target is in numbers (Y in step 409), the control unit 16 lets the display section 11 display the display targets 33b and 33c whose coordinates of display positions match up with the coordinates of the positions of the plurality of cells configuring the pointer 32 in the display so as to be distinguishable from the display target 33a whose coordinates of a display position do not match up with the coordinates of the positions of the plurality of the cells, as shown in (e) of Fig. 3 (step S413). Further, the control unit 16 displays a cursor 34 used for selecting any one of the display targets 33b and 33c whose coordinates of display positions match up with the coordinates of the positions of the cells (step 414). The control unit 16 controls the cursor 34 in such a way that the display targets 33b and 33c whose coordinates of display positions match up with the coordinates of positions of the cells are switched to be pointed by operation of the operation keys 13 (the processing is carried out by reference to the display control program shown in Fig. 1). Upon acceptance of determination operation performed by the operation keys 13 (the determination operation is operation for determining one display target to be selected by the cursor 34) after display of the cursor 34 (step 415), the control unit 16 determines that the display target pointed by the cursor 34 at that point in time is selected (the processing is carried out by reference to the selection/determination program shown in Fig. 1). The control unit 16 subsequently performs processing appropriate for the display target pointed by the cursor 34 (e.g., a jump to the next menu item, launching of an application program, and the like) (step 416).

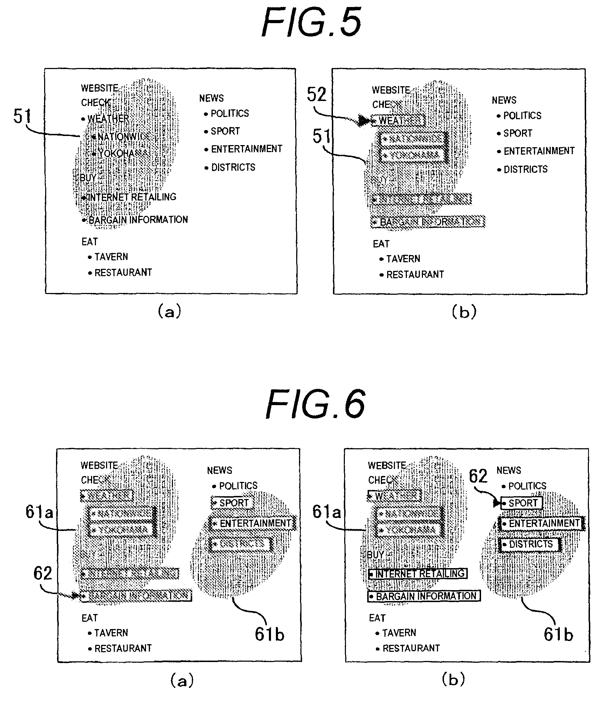

Fig. 5 shows exemplary displays provided by the portable terminal device of the embodiment. Both (a) of Fig. 5 and (b) of Fig. 5 show an exemplary embodiment in which the shape of a contact surface of a finger brought into a touch with the touch pad 12 is taken as the shape of a pointer 51 and in which a website acquired by the portable terminal device by way of a communications network is displayed. In (a) of Fig. 5, a case is shown where display targets that can be selected by the pointer 51 remain unchanged, and in (b) of Fig. 5 a case is shown where display targets that can be selected by the pointer 51 are distinguishably displayed. In (b) of Fig. 5, an area pointed by the pointer 51 includes in numbers a portion or entirety of a display area of a display target that can be selected by the pointer 51; namely, "• Weather," "• Nationwide," "• Yokohama," "• Internet retailing," "and "• Bargain information." The corresponding display targets "• Weather," "• Nationwide," "• Yokohama," "• Internet retailing," "and "• Bargain information" are displayed in color so as to be distinguishable from other display targets that can be selected by the pointer 51; namely, "• Tavern," "• Restaurant," "• Politics," and "• Sport," "• Entertainment," "• Districts." Further, a cursor 52 for making it possible for the device user to select any one from these display targets is displayed for the corresponding display targets "• Weather," "• Nationwide," "• Yokohama," "• Internet retailing," "and "• Bargain information." When received determination operation performed by way of the operation keys 13 after display of the cursor 52 for any of the display targets, the portable terminal device determines that the display target pointed by the cursor 52 at that point in time is selected.

The portable terminal device and the display control method implemented by the portable terminal device of the present exemplary embodiment make it possible for the device user to visually ascertain a contact surface of a finger during operation of the touch pad by way of the display section, by reflecting a contact surface to be brought into contact with the touch pad on the shape of the pointer displayed on the display section. Therefore, reproducibility of an operation output can be enhanced. Intuitive operation or elaborate operation utilizing a touch pad can consequently be improved.

When the area pointed by the pointer includes in numbers a portion or entirety of the display area of the display target that can be selected by the pointer, a cursor for pointing any one of the display targets is displayed in order to select any one from the display targets, whereby the device user can select one display target. By reference to Fig. 3 and Fig. 5, explanations have been provided to the exemplary embodiment in which the cursor points any one of a plurality of display targets. However, the present invention is not limited to the embodiment. The essential requirement is a display form for making it possible for the device user to identify any one of display areas of display targets that belong to the range pointed by the pointer and that can be selected by a pointer (e.g., a display color of one display target is made different from a display color of the other display targets).

The portable terminal device of the exemplary embodiment of the present invention has been described in connection with the configuration in which the display section 11 is provided on one side of the unit and in which the touch pad 12 is provided on the rear side of the display section. However, the location at which the touch pad 12 is to be placed is not limited to the rear side of the display section. For instance, the portable terminal device can also be configured in such a way that a display surface of the display section 11 shown in (A) of Fig. 2 and the touch panel 12 are provided in the same plane or that the touch panel 12 is provided on a side surface of an enclosure (a surface other than the front and rear sides of the enclosure).

The portable terminal device of the exemplary embodiment of the present invention is configured so as to be equipped with a touch pad. The portable terminal device can also be equipped with a touch panel. A difference between the touch pad and the touch panel referred to herein lies in a positional relationship between the contact surface for detecting a press and the display surface of the display section. The touch panel refers to a configuration in which the contact surface for detecting a press and the display surface of the display section lie in the same plane and in which a portion of the display surface is included in the contact surface. On the contrary, the touch pad refers to a configuration in which the contact surface for detecting a press and the display surface of the display section do not lie in the same plane or in which the contact surface for detecting a press and the display surface of the display section lie in the same plane but a portion of the display surface is not included in the contact surface.

In the case of the portable terminal device of the embodiment of the present invention, the device user is considered to operate the touch pad 12 with a plurality of fingers. Fig. 6 shows exemplary displays of the portable terminal of the embodiment of the present invention. Both (a) of Fig. 6 and (b) of Fig. 6 show exemplary embodiments in which shapes of contact surfaces of two fingers brought into contact with the touch pad 12 are taken as shapes of respective pointers 61 a and 61 b and in which a website acquired by the portable terminal device by way of the communications network are displayed. The portable terminal device performs processing described in connection with the respective pointers 61 a and 61 b, by reference to the flowchart shown in Fig. 4. Display targets "• Weather," "• Nationwide," "• Yokohama," "• Internet retailing," "and "• Bargain information" that can be selected by the pointer 61a and display targets "• Sport," "• Entertainment," and "• Districts" that can be selected by the pointer 61 b are displayed in colors in (a) of Fig. 6 and (b) of Fig. 6. When the display target pointed by the cursor 62 is controlled and when the cursor 62 is operated so as to move downwardly while the cursor 62 points the lowest display target "• Bargain information" among the display targets that can be selected by the pointer 61 a (an exemplary display of (a) in Fig. 6), the portable terminal device performs control operation such that the cursor 62 points the highest display target "• Sport" among the display targets that can be pointed by the pointer 61b (an exemplary display of (b) in Fig. 6). Even when a plurality of pointers are displayed and when the display targets that can be selected by the pointer are included in the ranges of the respective pointers, the device user can select one display target.

In the portable terminal device of the exemplary embodiment of the present invention, another shape may also be determined to be the shape of the pointer instead of the shape of the pointer being made similar to the shape of the pressed area (processing pertaining to step 403 in the flowchart shown in Fig. 4). In processing pertaining to step 408 described in connection with Fig. 4, a determination comes to be made as to whether or not the coordinates of positions of the plurality of cells configuring a pointer whose shape is specified by a certain figure match coordinates of a display position of the display target that can be selected by the pointer.

### Industrial Applicability

As above, the portable terminal device and the display control method of the present invention yield an advantage of the ability to make it possible to enhance reproducibility of operation output from a touch pad or an input device typified by the touch pad for detecting a press, thereby improving ease of intuitive operation and elaborate operation of the input device. They are useful in a field of a portable terminal device equipped with a touch panel or an input device typified by a touch pad for detecting a press.

## Claims

1. A portable terminal device comprising:
a display section for displaying various pieces of information thereon;
a press detection section that is adapted to detect a press; and
a control unit that is adapted to control a shape of a pointer to be displayed on the display section in accordance with a pressed area detected by the press detection section.

2. The portable terminal device according to claim 1, wherein the control unit accepts operation for selecting any of display targets when at least a part of the display targets that can be selected by the pointer is included in numbers in the area specified by the pointer.

3. The portable terminal device according to claim 2, comprising an operation section, wherein
the control unit selects any of the display targets in response to operation that is accepted by the operation section and that is intended for selecting any of the display targets.

4. The portable terminal device according to claim 1 or 2, wherein, when a plurality of pressed areas are detected by the press detection section, the control unit displays on the display section a plurality of pointers based on the respective pressed areas.

5. The portable terminal device according to any one of claims 1 through 4, wherein the control unit controls the shape of the pointer so as to be a shape similar to the pressed area.

6. The portable terminal device according to any one of claims 1 through 4, wherein the control unit controls the shape of the pointer so as to be a shape of a predetermined figure.

7. The portable terminal device according to any one of claims 1 through 6, wherein the control unit controls a size of the pointer in accordance with pressure of the press detected by the press detection section.

8. The portable terminal device according to any one of claims 1 through 6, comprising an operation section, wherein
a size of the pointer is controlled in accordance with input operation accepted by the operation section.

9. A display control method comprising:
detecting a pressed area;
controlling a shape of a pointer to be displayed in accordance with the pressed area where a press has been detected; and
displaying the pointer whose shape is controlled.

## Amended claims

### Amended claims under Art. 19.1 PCT

1. (Amended) A portable terminal device comprising:
a display section for displaying a plurality of selectable pieces of information thereon;
a first operation section that is adapted to detect a contact area;
a second operation section that is adapted to receive an instruction for selecting any of the pieces of information; and
a control unit that is adapted to cause the display section to distinguishably display that at least one piece of information is a select target among a plurality of pieces of information contained in the contact area detected by the first operation section, and to control to switch the select target on the basis of the instruction received by the second operation section.

2. (Amended) The portable terminal device according to claim 1, wherein the control unit causes the display section to display a pointer on the basis of the contact area detected by the first operation section.

3. (Amended) The portable terminal device according to claim 2, wherein, when the detected area detected by the first operation section exists in numbers, the control unit causes the display section to display the pointer in numbers on the basis of the respective contact areas.

4. (Amended) The portable terminal device according to claim 2, wherein the control unit controls a shape of the pointer so as to be a shape similar to the contact area.

5. (Amended) The portable terminal device according to claim 1, wherein the control unit causes the display section to display information contained in the contact area and information not contained in the contact area among the plurality of selectable pieces of information.

6. (Canceled)

7. (Canceled)

8. (Canceled)

9. (Canceled)
